**Europäisches Patentamt**

**European Patent Office**

**Office européen des brevets**

(19)

(11) Publication number: **0 000 231**
**B1**

(12) # EUROPEAN PATENT SPECIFICATION

(45) Date of publication of patent specification: **25.11.81**

(21) Application number: **78200058.2**

(22) Date of filing: **21.06.78**

(51) Int. Cl.³: **F 17 D 3/01, F 16 K 21/00, B 05 B 12/04, A 01 G 25/16, G 05 B 19/00, F 16 K 31/00**

(54) **A distribution device for a fluid such as water.**

(30) Priority: **24.06.77 US 809658**

(43) Date of publication of application:
**10.01.79 Bulletin 79/1**

(45) Publication of the grant of the European patent:
**25.11.81 Bulletin 81/47**

(84) Designated Contracting States:
**DE FR GB NL**

(56) References cited:
**FR - A - 2 088 763**
**FR - A - 2 304 843**
**US - A - 3 140 720**
**US - A - 3 191 713**
**US - A - 3 196 686**

(73) Proprietor: **Van Haaften, Henry Marius Theodor**
**Aquamarijnstraat 793**
**NL-9743 PV Groningen (NL)**

(72) Inventor: **Van Haaften, Henry Marius Theodor**
**Aquamarijnstraat 793**
**NL-9743 PV Groningen (NL)**

(74) Representative: **van der Beek, George Frans, Ir. et al,**
**Nederlandsch Octrooibureau P.O. Box 29720**
**NL-2502 LS The Hague (NL)**

Courier Press, Leamington Spa, England.

## A distribution device for a fluid such as water

The invention relates to a distribution device for a fluid such as water, comprising a main conduit communicating with valve stations for outlets from the main conduit each adapted to be individually closed by a valve and a plug body adapted to move through the conduit for opening each valve sequentially for a period of time depending upon the retention time of the body at a valve station in which the plug body and each valve station have cooperating means part of which are expandable radially in the conduit with respect to each other so as in a protruding position to retain the plug body in the valve station and in a radially retracted position to allow the plug body to leave the valve station, said device comprising mutually cooperating means for determining the retention time of the body at a valve and thus the opening period of each valve in each valve station, including means to adjust said opening period, operating on said radially expandable means, there being a valve in the plug body in the path of a fluid cooperating with the radially movable means for influencing the operation of such means.

Such a device is known from French patent specification 2.304.843. In this known device there is a flow limiting fixed valve between two elastic fluid containers in the plug body, one of which when expanded moving legs outwardly to stop and retain the plug body at a valve in the main duct so as to open this valve towards a branch duct under the influence of the fluid pressure on the plug body in the main duct. The retention time of the plug body in each valve station is adjustable by an adjustable counterpressure on one of the elastic fluid containers, but this allows only one setting for all the valve stations, no variation of the retention time for one station independent on the other stations being possible.

Particularly in the case of an extensive distribution mains this is not acceptable, since frequently e.g. different kinds of crop have to be rained upon, which each require a different quantity of water. Therefore, such systems cannot be used especially in arid areas, where only a small quantity of water is available.

The invention has as its main object to obviate said disadvantage and to provide a reliable and reliably operating device with much freedom for independent adjustment of the retention time in all the valve stations.

To achieve this, a device as indicated in the preamble is according to the invention characterized in that the means for determining the said retention time of the plug body include means to open or close said valve in the plug body under delay control of a programmed memory fed with the required adjusted retention time for the plug body in the concerning valve station so as to adjust said retention time individually for each station.

It is thereby easily possible to adjust the opening period for each valve station independently of the opening periods for all other valve stations.

The control of the valve may be achieved by the action of an electro-magnetic field. The plug body may furthermore comprise an address counter whose contents are incremented by one at each outlet member, whilst the memory location is selected and read on the basis of the state of the address counter.

The conveying conduit is preferably a ring conduit with a closed circuit in which the body is propagaged by the pressure of the liquid or other fluid to be distributed. A liquid reservoir may communicate with the ring conduit for temporarily storing the liquid pushed on by the body, the liquid being withdrawn from said reservoir to be fed to the main conduit again in a later stage.

This invention also relates to particular embodiments of the general idea given above, which will become apparent from the following description of several preferred embodiments shown in the attached drawings and from the appended claims. The electric source of the body may be formed by a battery and/or a generator driven by the fluid pressure in the plug body.

The invention will be described more fully with reference to the drawing showing one embodiment. In the drawing:

Fig. 1 is a perspective view of part of a ring conduit mains with distribution ducts communicating therewith;

Fig. 2 is a somewhat diagrammatic longitudinal section of the ring conduit and the plug body moving therein in a valve station in a first embodiment;

Fig. 3 shows a longitudinal section as Fig. 2 but of a different embodiment;

Fig. 4 is a block diagram of part of the control-circuitry and of means for programming the control-memory;

Fig. 5 is a block diagram of the control-circuitry;

Fig. 6 shows a longitudinal section through a plug body according to the invention in a different embodiment, present in a valve in the conduit;

Figs. 7a and 7b show a longitudinal section through such a plug body in a valve in the main conduit in a further embodiment; showing the left end part in Fig. 7a and the right hand part in Fig. 7b with some short axial overlap for more clarity.

Fig. 8 shows a transverse section through the body of Fig. 7 in a plane through the line VIII—VIII in Fig. 7 in a reduced scale;

Fig. 9 shows a longitudinal section through another embodiment of such a body according to the invention; and

Fig. 10 shows a transverse section along the line X—X in Fig. 9.

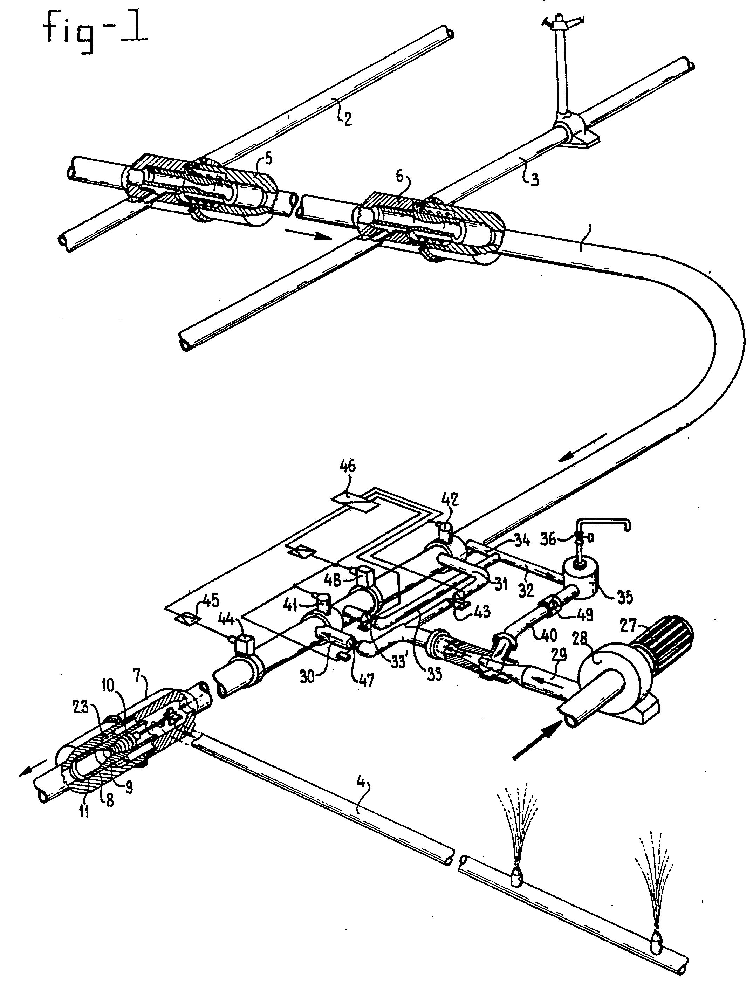

The ring conduit 1 of Fig. 1 extends in a closed loop and communicates with a plurality of distribution ducts 2, 3, and 4. The path from the ring conduit to the distribution ducts can be blocked by means of valves at stations 5, 6 and 7. The valves are formed by tubular valve bodies 8, adapted to slide in the ring conduit across the outlet opening from conduit 1 to the distribution duct 2, 3 or 4, to be described in more detail below.

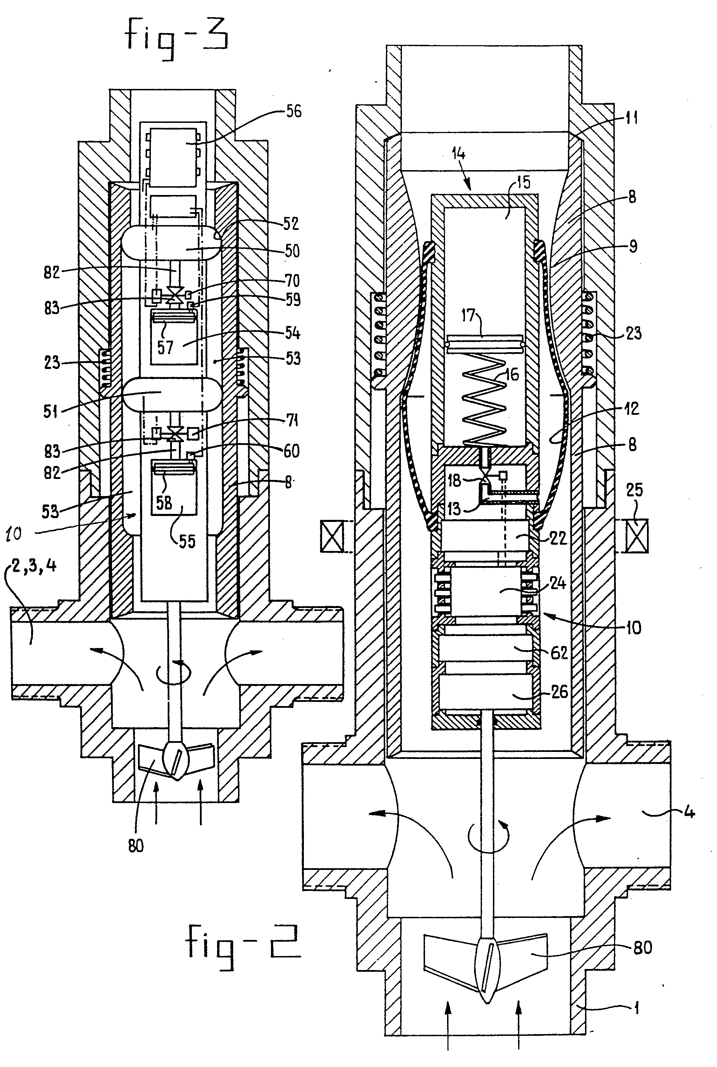

Each valve body 8 has an inwardly directed annular portion 9 (Fig. 2). A plug body 10 is movable in and through conduit 1. When this body 10 reaches a station 5, 6 or 7, it enters a valve body 8 and pushes it towards the open position, being the top position in Fig. 2, since the plug body 10 has a portion 12 of larger diameter such that the plug body cannot move past the annular part 9. Pushed by the fluid pressure in conduit 1, the valve body 8 is thus moved into the top position of Fig. 2 up to the stop 11. The portion of larger diameter of the plug body 10 is formed by an expandable, flexible envelope 12. The envelope 12 expands radially because the duct 13 establishes an open communication between the interior thereof and a hydro-accumulator 14. The hydro-accumulator 14 comprises a reservoir of a fluid pressurized by a piston 17 biassed by the tension spring 16. The duct 13 includes a valve 18. The bias pressure on the piston 17 is chosen so that the envelope 12 constantly engages the inner side of the duct 1 or the valve body 8. The pushing power of the fluid in the conduit 1 is such that at a constriction of the conduit as at 9 the envelope is compressed and the fluid is pressed back towards the accumulator provided, of course, the valve 18 is open. The plug body 10 is thus able to pass this constriction 9.

The valve 18 can be closed by means of an electric signal. This signal emanates from an electro-magnetic signal generator 25 disposed close to a valve and surrounding the conduit. The valve 18 is actuated by means of the electro-magnetic coil 22. The plug body 10 includes a memory 24 having an address counter. The memory may have a plurality of locations, for example 100, in which a defined, coded time interval is stored. When the signal generator formed by the magnet ring 25 is passed by, it supplies the starting signal for building up the magnetic field, whilst at the same time the address counter is incremented by one. Moreover, a time generator is started, which counts the encoded time interval of the memory location concerned.

The plug body 10 may be energized by a battery 62 or, as the case may be, from a generator 26 shown diagrammatically, with a driving propeller 80 rotated by the stream of fluid. The memory may be programmed from the outer side of the plug body 10 by actuating appropriate control-members. In this way a time interval for the opened condition can be selected for each memory location or valve.

When the magnetic field disappears at the termination of the energization of the coil 22, valve 18 is opened, the plug body 10 is moved on by the fluid pressure, since the envelope 12 can again be compressed by annular part 9, so that the fluid flows back through the duct 13. Under the action of the spring 23 the valve body moves downwardly as seen in Fig. 2 and the duct 4 is blocked. In this way the identical valves 5, 6 and 7 and possibly other such valves are actuated in order of succession so that each time one of the distribution ducts receives fluid such as water whilst the other ducts are closed.

Fig. 3 shows an embodiment in which two expandable members 50 and 51 are provided instead of one. These members are annular inflatable envelopes 50 and 51, which engage, in the expanded state, a stop formed by the edge 52 of the annular recess 53 of the valve body 8. The envelopes 50 and 51 communicate through ducts 82 with the hydro-accumulators 54 and 55. Each duct 82 can be closed by means of a valve 83, actuated electromagnetically by a signal generator 56 in the memory means. The signal generator 56 supplies a signal when the pistons 57 and 58 in the hydro-accumulators have performed a predetermined stroke. This occurs when the envelopes 50 and 51 are allowed to expand strongly when a distribution duct is passed by offering the rather wide annular recess 53. The pistons 57 and 58 each actuate a relay 59 and 60 respectively. When the two relays are energized, the signal generator in the memory 56 applies a pulse to the coils 70 and 71 so that the two valves 83 are simultaneously closed. After the termination of the retention time a second pulse is supplied for opening these valves.

It should be noted that it is also possible to programme a retention time zero in the memory. In this case, when the concerning valve station 5, 6 or 7 is passed by, no signal is applied to and no force is applied on the valve control. The plug body moves past the valve without causing the opening thereof and so there is no distribution of water or the like at this station.

The water or the like is supplied, for example, (Fig. 1), through the supply duct 29 by means of a pump 28 driven by a motor 27. The supply duct splits up into two branches 30 and 31, which can supply water to the ring conduit 1 at relatively spaced points. The ring conduit furthermore communicates with an outlet duct 32, which can withdraw water from the ring conduit 1 by means of the branch lines 33 and 34 at two points. The duct 32 is connected with the reservoir 35 including a safety valve or relief valve 36 for allowing an excess quantity of water and air to escape therefrom. In this reservoir there may be means not shown to avoid air from being fed therefrom into the system through duct 40. During its travel through the ring conduit the plug body pushes the water in front of it and the water is temporarily stored in the reservoir 35. Through the duct 40 the outlet side of the reservoir communicates with the supply duct 29 by a suitable injector as shown. At the connecting points of the supply ducts 30 and 31 valves 41 and 42 are provided. The ducts 30 and 31 can be closed by the magnetic valves 43 and 47. Viewed in the direction of travel of the plug body 10, which is from left to right in the top of Fig. 1 and from the right hand upper part to the left hand lower part in the remainder of Fig. 1, the switch 44 is disposed in front of the supply duct 30, which switch can actuate the relay 46 through a coil 45, which relay can actuate the valves 41 and 42 as well as the valve 47 in the duct 30 and the valve 43 in the duct 31. In the position of the plug body 10 (in the valve station 7) shown in Fig. 1 the valve 41 is closed and the valve 42 is opened, the valve 47 is opened and the valve 43 is closed. This means that during the travel of the plug body 10 by the water supplied by the duct 30 into the ring conduit the water displaced in front of the body 10 is conveyed through the outlet ducts 33 and 34 towards the reservoir 35. When the switch 48 is passed by body 10, relay 46 is actuated as a result of which the valve 41 is opened, the valve 42 is closed and a valve 33' in duct 33 is closed. Moreover, the valve 43 is opened and the valve 47 is closed. The water supplied flows on through the duct 31 to the back of the plug body 10, so that this is conveyed further and the water pushed out in front of the body is conveyed through the duct 34 towards the reservoir 35. As soon as the plug body 10 continuing its movement then passes the switch 44, the relay 46 is actuated through the coil 45 so that the valve 41 is closed and the valves 42 and 33' are opened. Moreover, the valve 47 opens and the valve 43 closes so that the water supplied is again supplied through the duct 30 to the ring conduit 1 and the water pushed out in front of the body 10 is supplied through the ducts 33 and 34 to the reservoir 35. Subsequently the plug body arrives at the valve station 7, where the valve body 8 is thus opened, while the further valves in the ring conduit 1 remain closed. The pumped water is thus now supplied to the distribution duct 4.

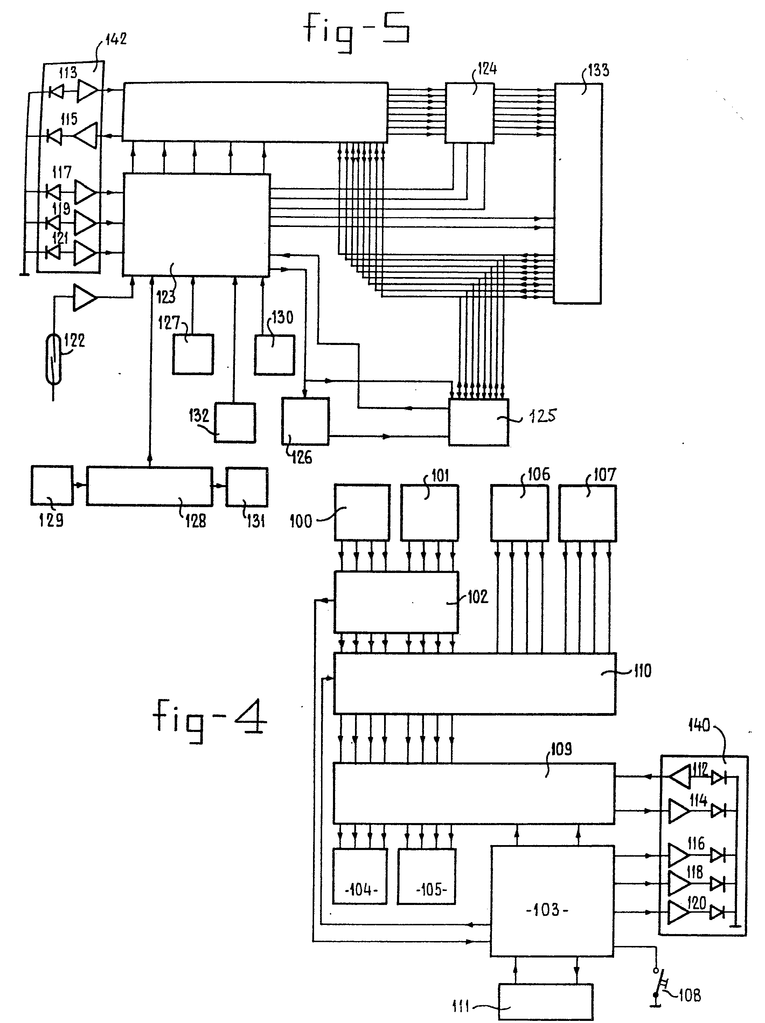

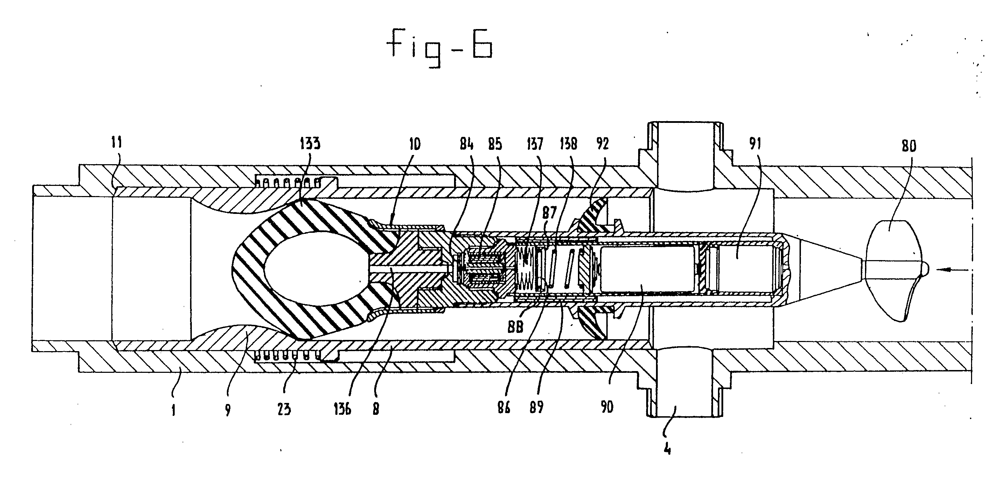

An embodiment of a combined programming-unit/delay-unit (see Figs 4 and 5) constitutes a system by which some hundred delay times can be stored in a digital memory for subsequent use in a fixed order of succession and in dependence upon given conditions. The delay periods may be freely chosen between zero and 99 minutes. Obviously systems with other ranges of delay periods can be used instead.

The programming unit supplied from the electric mains comprises the circuits by which all the memory positions can be written or read, an accumulator charging device for the delay unit and circuits for the data transmission from and towards the delay unit. The delay unit is fed from a built-in voltage source, preferably an accumulator and comprises apart from the delay time generator with its corresponding control-circuits a Charging Current Regulator 128, a Battery Check 127, one or two Solenoid Drivers 132 (depending upon the design), a Ring Magnet Position Detector 130, a Programmed Delay Memory 133 for storing in each address one of the possible 100 delay digits, data-transmission- and control-circuits.

*Programming Unit* (Fig. 4):
By means of the Address thumb wheel switches 100 and 101 an address is supplied and one memory location in the delay unit is selected, whose contents have to become known. At the end of a delay period of ½ to 1 second after the setting of the thumb wheel switches, the Number Change Detector 102 applies a trigger signal to the Controller 103 in order to start a read cycle, by which through the transmission circuits a memory address is serially applied to the Delay Unit (Fig. 5), which responds by transmitting back the memory contents (i.e. the stored delay time). This information appears on the Delay Displays 104 and 105, leaving the information in the memory unchanged. If it is desired to change the information at the selected memory location the desired delay time is set on the Delay thumb wheel switches 106 and 107 and the Write contact 108 is closed. During the subsequent write cycle the information at the relevant memory location is replaced by the new selected delay time. For data transmission purposes a parallel-series/series-parallel shift register 109 is used to convert eight parallel supplied bits into a serial information burst of eight bits and vice versa. The input signals from the thumb wheel switches are supplied to a Multiplexer 110, which converts the total of 16 input bits (4 x 4) into 2 x 4 output bits. The transmission clock signal is indirectly derived from the Transmission Oscillator 111. The entire unit is governed by the Controller 103.

The coupling of the Programming Unit (Fig. 4) and the Delay Unit (Fig. 5) is established by means of two transmitter/receiver units, for instance containing LED photo-diode pairs 112, 113, 114, 115, 116, 117, 118, 119 and 120, 121. Only the charging circuit supplying a d.c. charging current for the batteries can be connected through a direct lead.

*Delay Unit* (Fig. 5):
The Delay Unit has two operating modes:
1. a programming mode during which the stored information in the memory can be read or new information can be stored with the aid of the programming unit;

2. a delay mode during which control-signals are generated to solenoid drivers depending on the programmed delay times, the position of the ring magnet, the accumulator voltage and the like.

In the programming mode the delay unit (Fig. 5) is mechanically coupled with the programming unit (Fig. 4). If the coupling is correct, this is detected in the delay unit by means of the "programmer attached and ready" switch 122, after which the programming mode is automatically selected.

The data transmission from and to the delay unit is controlled by the programming unit by means of the clock signal, the read/write signal and strobe signal. The controller 123 interprets the received information and supplies internal control-signals. In the delay mode the desired delay time is selected in that the parallel load counter 124, the contents of which is incremented by 1 at each station by means of an instruction "select next delay time" (address inc. clock). At each address a parallel load delay counter 125 is loaded with the contents of said address, and after that the minutes generator 126 receives a start instruction and delivers 1 minute clock pulse to the delay counter, the contents of which is stepped down to zero. When the zero state is reached, the delay time has elapsed.

Battery check circuit 127 supplies information to the controller 123 about the loading state of the accumulator 131 and the charging current regulator 128 indicates whether the generator 129 supplies sufficient current and the ring magnet detector 130 provides a position indication of the ring magnet. The solenoid driver 132 controls the electro-mechanical converters.

The programming unit can be positioned in one of the valve stations. As soon as the plug body reaches this station the operator is able to change the delay times stored in the memory unit if necessary. The coupling between the programming unit in the station and the delay unit in the plug body is realized by the transmitter/receiver unit 140 in the programming unit and the transmitter/receiver unit 142 in the plug body (see Figs 4 and 5). Although in the Figs 4 and 5 light emitting diodes and photo-sensitive diodes are used in this transmitting/receiving unit it will be clear that also other means like ultrasonic transducers or electromagnetic transducers can be used instead of these diodes.

According to a further embodiment of the invention photo-sensitive cells are positioned on the outside of the plug body, and in at least one of the valve stations the conveying conduit is replaced by a tube section of light transparent material. During the period the plug body is retained in said station equipped with said light transparent tube section light from the environment is transmitted through said light transparent tube section and received by the photocells. The current delivered by these photocells can be used for recharging the batteries in case the generator does not generate a sufficient charging current or in case the plug body is not equipped with a generator at all.

In the embodiment shown in Fig. 6 there is again a duct 1 with a valve body 8 controlling an opening to a distribution duct such as 4 and a spring 23 tending to close this opening. The valve body again has an annular part 9 protruding inwardly.

The plug body 10 has a head 133 filled with a pressure fluid such as water. The interior is in communication, by a duct 136, with a bellows 137 acting as an accumulator and kept under pressure by a spring 138. Between duct 136 and bellows 137 there is a disc spring valve 84, operated by a solenoid 85. Spring 138 presses on bellows 137 through a disc 86 having a cylindrical sleeve 87 with a magnet ring 88 cast therein. At 89 there is an annular print connected in a circuit to solenoid 85. The operating current is supplied by a battery 90, charged by generator 91, energized when propeller 90 is rotated by the fluid in duct 1. A rubber sealing ring 92 surrounds the plug body 10.

If this plug body, moved by liquid pumped through duct 1 by pump 28, reaches this valve body 8, the head 133 is withheld by annular part 9 and the plug body 10 thus takes valve body 8 with it to the left, thus opening duct 4 for distributing fluid from duct 1 through duct 4 to one or more discharge points therein. The resistance offered by spring 23 on valve body 8 and thus on plug body 10 gives some compression of head 133 and some flow of the liquid therein through duct 136 along disc valve 84 to bellows 137. This pushes disc 86 to the right until magnet ring 88 reaches a position opposite a reed contact mounted onto the print 89, which causes an energizing of solenoid 85 to close valve 84. Further compression of head 133 is thus avoided and head 133 is thus kept in place in the annular part 9 as shown to move valve body 8 further to the left into the fully open position as shown. As soon as the delay unit on print 89 gives a signal that the opening time for this particular valve body 8 has lapsed, it de-energizes solenoid 85 so that disc valve 84 opens by its own elasticity. The fluid from head 133 is now further pushed out therefrom by the forces acting thereon, the pushing force of the fluid in duct 1 from the right and the withholding and compressing action of annular part 9 to the right and inwardly, so that head 133 will soon be allowed to pass through the interior of part 9. Plug body 10 thus leaves this station, valve body 8 is closed by spring 23 and bellows disc 86 with magnet ring 88 returns to their normal position.

In the electric circuit a signal may be derived from generator 91 to allow this normal operation only if, after opening valve body 8, there is sufficient flow in duct 1 to rotate propeller 80 sufficiently to generate a minimum voltage in generator 91. If this voltage is not reached in a predetermined time, e.g. in 30 seconds, solenoid 85 is not (or no more) energized. The circuit may be such that, if the fluid pressure is restored in duct 1, the normal sequence is continued where it was interrupted, or solenoid 85 is no more energized and the plug body 10 is allowed to leave this valve body 8 and move to the next valve station.

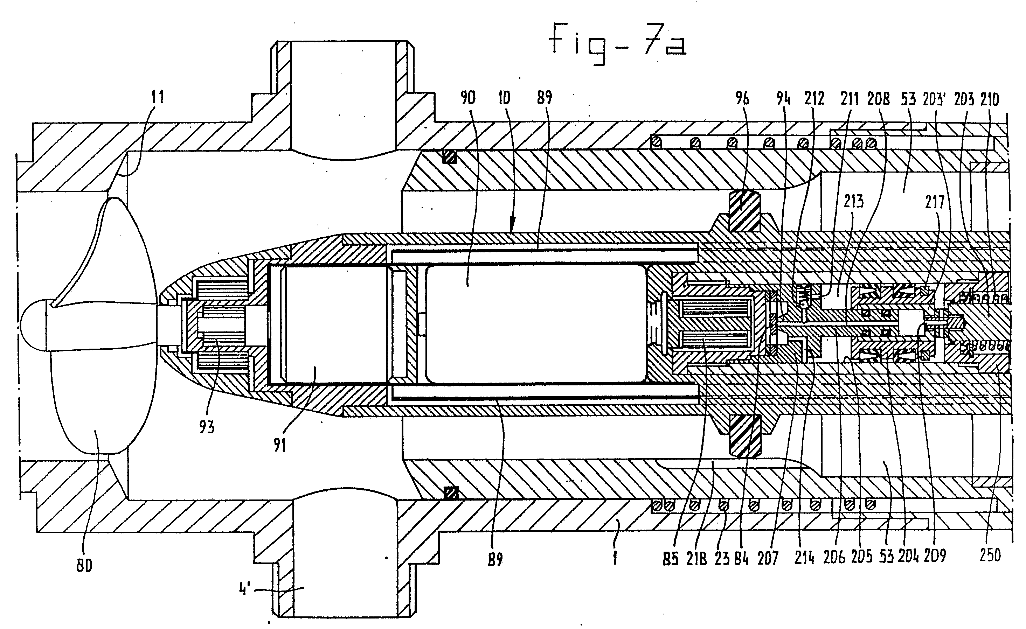

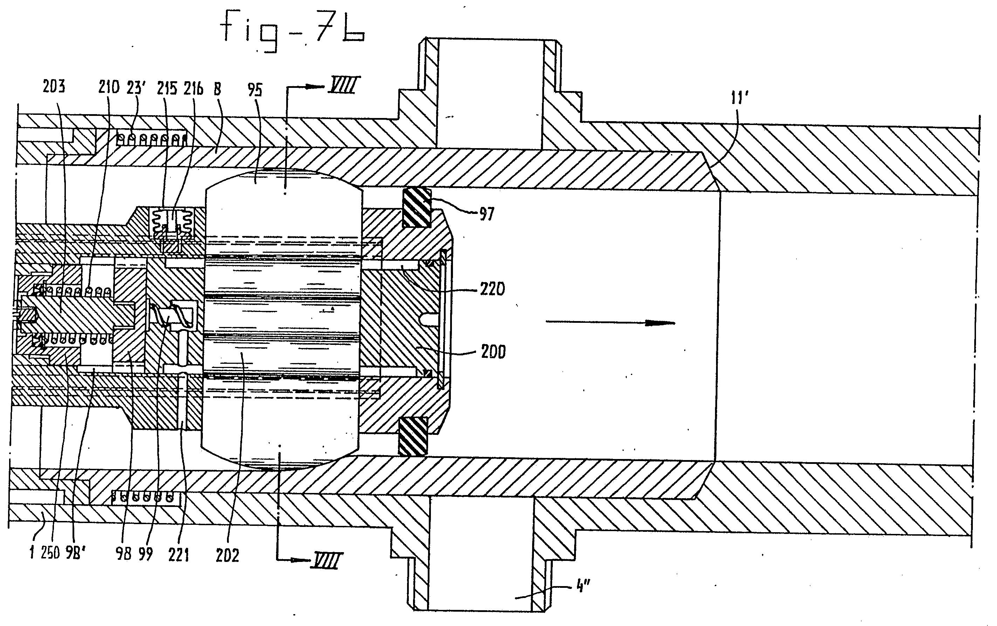

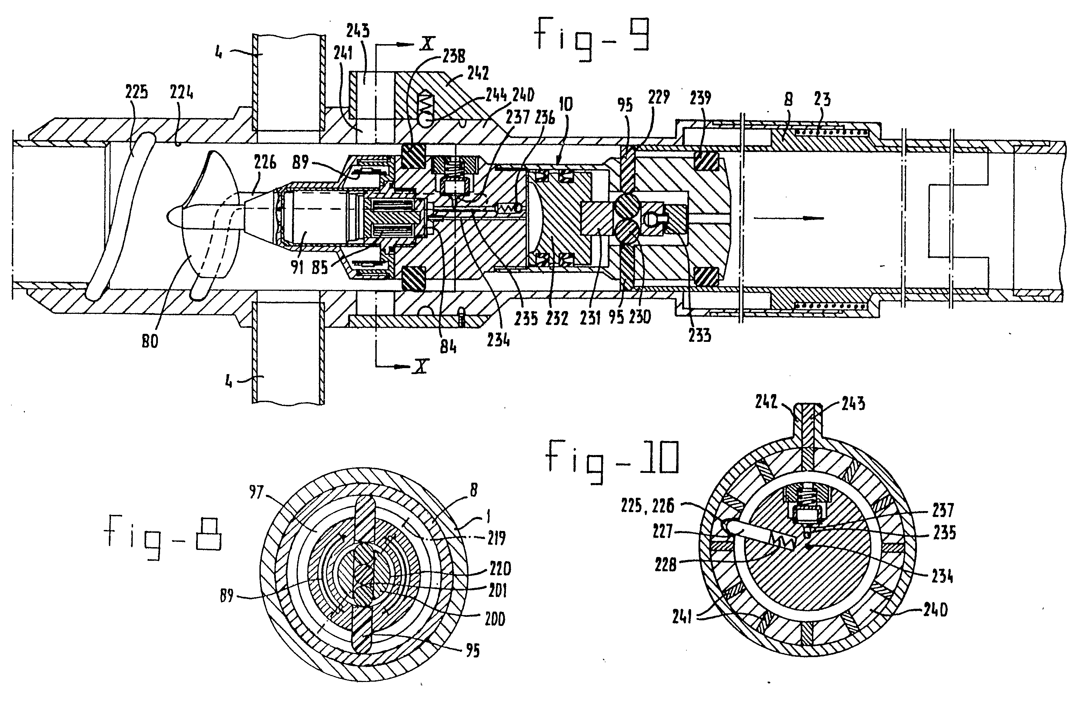

In Figs 7 and 8 a plug body 10 is shown adapted to move in both directions. It has, as the plug body of Fig. 6, a propeller 80, a generator 91, a battery 90, a printed circuit etc. 89, and a solenoid 85 operating disc spring valve 84. A magnetic coupling 93 connects propeller 80 to generator 91. Contrary to what is the case in Fig. 6, solenoid 85 when energized opens valve 84 by lifting its central disc from a seat nipple 94.

The valve body 8 in this case operates two sets of openings 4' and 4'' to discharge lines 4, which may, however, be united to lead to a common discharge line. Valve body 8 has two springs 23 and 23', tending to keep it in a central position in which all the openings 4' and 4'' are closed. At both ends this valve body 8 has a conical end face cooperating with a stop edge 11 at the left and 11' at the right, formed as a transition from a narrower to a wider cylindrical part of duct 1 in the concerning station. A wider part 53 in valve body 8 is adapted to take up protruding fins 95 to be described in more detail in order to stop and be moved by plug body 10. This body has sealing rings 96 and 97 to both sides of fins 95. A slidable disc 98 is prevented from rotation by keyways 98' and carries a short worm 99 engaging the worm thread within a rotating body 200, taking up in a diametrical slot 201 three rollers 202.

The disc 98 has a central pin 203 carrying on its hollow extension 203' a hollow piston 204 movable sealingly in cylinder 205 and taking up in its center a stud 206 of a casing 207. The nipple 94 gives fluid connection to a central bore 208 through casing 207, opening in piston 204. Pin 203 has axial and radial bores 209 extending from its left front face in its extension 203' in piston 204 to openings in its outer surface opening to the space between piston 204 and a closing sleeve 250 for cylinder 205. A spring 210 urges disc 98 to the right. Bore 208 has a branch bore 211 with a ball check valve 212, opening in the space 213 within cylinder 205. A further bore 214 extends between the space around nipple 94 and space 213. A pressure operated switch 215 moves a magnet 216 if put under fluid pressure from outside. Piston 204 carries a magnet ring 217.

In valve body 8 there are one or more slots or grooves 218 at the left hand transition from the narrower bore therein to the wider part 53.

The operation of this embodiment is as follows. If from pump 28 (Fig. 1) water or other fluid to be distributed is pumped into duct 1, it pushes the plug body 10 forward, say from left to right in Fig. 7. The disc 98 with piston 204 are in a position more to the left than shown in Fig. 7; the rollers 202 are in a position shown by dot and dash line 219 in Fig. 8 and the fins 95 are radially retracted. As soon as this body 10 reaches a valve body 8, sealing ring 97 passes groove 218 when reaching widened part 53. The pressure of the fluid between sealing rings 96 and 97 thus drops to the level of the pressure in front of (to the right of) the plug body. By this lower pressure acting on disc 98 through bore 221, the resultant force on disc 98 by the combined action of spring 210 and this fluid pressure will be to the right, tending to rotate body 200 by worm 99. As long as fins 95 have not reached the widened part 53 to a sufficient extent, body 200 remains in the position 219 of Fig. 8 with the rollers 202 pushing against inner edges of the fins 95. As soon as fins 95 have sufficiently reached this part 53, body 200 now becomes free to be rotated by worm 99 to the position shown in full lines in Fig. 8 while pushing these fins outwardly. Disc 98 moves to the right, to the position shown in Fig. 7, and this places magnet ring 217 opposite a reed contact (not shown) connected to printed circuit 89 to start the counting sequence to keep body 10 in valve body 8 during the desired time interval. The plug body is pushed on to the right, until the fins contact the right end of the widened part 53 and it is then pushed on, taking the valve body 8 with it to the right until duct 4' is fully opened. During this movement of the plug body the back sealing ring 96 reaches the zone of the groove(s) 218 and the front sealing ring 97 leaves the widened part 53 and gives sealing of the plug body in that area. The fluid pressure from the left, in the main conduit reaches the space between rings 96 and 97 through groove 218 and enters the plug body through bore 221. The resultant force on disc 98 by spring 210 and by this fluid pressure is now directed to the left, but disc 98 cannot move to the left as liquid to the left of piston 204 is entrapped in space 213.

As soon as a signal is received from the delay unit on print 89 indicating that the opening time of 4' has lapsed, the solenoid 85 is energized thereby, opening disc valve 84. Disc 98 is now allowed to move to the left by the said resultant force to the left on disc 98 as liquid may now flow from left to right of piston 204 through bores 214, 208 and 209. This movement from right to left rotates body 200 to bring slot 201 with rollers 202 back to position 219, so that fins 95 are pushed inwardly by the right hand edge of wider part 53 and plug body 10 is again moved on through duct 1, valve body 8 closing openings 4' by spring 23'.

Duct 211 with ball check valve 212 serve to allow overflow of such liquid from right to left of piston 204 when disc 98 moves to the right.

A pressure switch 215 is provided, operated by the pressure of the fluid in duct 1, which reaches this switch through groove(s) 218. If compressed it moves a small magnet 216 operating a reed contact (not shown) connected to the print 89, to allow energizing or continued energizing of solenoid 85 only if there is sufficient pressure in duct 1.

If the pressure in duct 1 operates from right to left, essentially the same occurs. The only differences are that the fins 95 contact the left hand end of wider part 53 of valve body 8 and opens it to the left, liberating ports 4″, that the fluid in duct 1 reaches pressure switch 215 by flowing around sealing ring 97 and propeller 80 is not rotated. In this case the station at the pump 29 (Fig. 1) should be changed to switch from pumping fluid into one end of the duct into discharging from this end to a reservoir like 35 and from discharging from the duct at the other side of this station to pumping fluid into this other end, which may easily be done by hand or automatically with the same valves as already present therein in Fig. 1 or by more simple means.

It is to be remarked that, if the compressible heads or bodies 12 of Fig. 2 and 133 of Fig. 6 would be made sufficiently elastic and the correct pressures of springs or elastic properties of bellows or accumulators such as 14 in Fig. 2 and 137 in Fig. 6 would be chosen, such plug bodies may well cooperate with a valve body 8 as given in Figs 3, 7 and 8, having a widened part 53 instead of a narrower part 9.

In Figs 9 and 10 a valve station with plug body 10 in it are shown, intended to have the plug body 10 move in one direction only. In a widened part 224 of duct 1 there is a helical groove 225 terminating in an axial groove part 226, which at its end merges gradially into the duct 1 again, i.e. becomes gradually more shallow. The plug body 10, having a propeller 80, generator 91 and in this case no battery, has a radially outwardly movable pin 227 urged outward by a spring 228.

The valve body 8 is longer than in the previous embodiments, is urged by spring 23 to the left and is urged to the right by fins 95 contacting terminal edge 229 of said valve body. These fins are radially movable and kept in their outward position by rollers 230 in body 231. This body 231 is united with piston 232 and is urged to the left by a leaf spring 233.

Solenoid 85 operates, if energized, disc valve 84 which is closed in its unloaded condition. Printed circuit 89 with reed contacts etc. is energized by generator 91 and adapted to energize solenoid 85. Bores 234 and 235 extend through the plug body, bore 234 terminating at valve 84 and bore 235 having a check valve 236 at its right end opening to the left. An opening 237 connects bore 235 to the outside of the plug body through a suitable filter. Sealing rings 238 and 239 are in this case made easily deformable, e.g. from soft cellular rubber, to bridge the difference between the inner diameter of the duct 1 and the wider part 224 thereof and give good sealing in both diameters.

In casing 240, e.g. from a non-magnetizable material such as a copper alloy, there are a number of weak iron discs 241, in this case 12, and around these an annular body 242, e.g. from a plastic material, is rotatable and carries a magnet 243. The body 242 has means to keep it in the required axial position and has an arresting spring loaded ball 244 to arrest it in any of 12 angular positions.

The operation of this embodiment is as follows. Plug body 10 enters the widened part 224 with fins 95, which are thus allowed to move radially outwardly. They do so as rollers 230 move to the position shown by leaf spring 233. In moving this way, check valve 236 opens to allow fluid to be expelled by the left side of piston 232. This fluid may leak along front sealing ring 239 through groove 225 to the front of the plug body. On further movement of the plug body, fins 95 engage end 229 of valve body 8 and move this to the right, thus opening distribution duct 4. Meanwhile, pin 227 reaches helical groove 225 in some position depending on the accidental angular position of plug body 10, and thus pin 227 moves outwardly to engage in this groove, so that further axial movement of the plug body also causes a rotation thereof until the pin 227 reaches the axial part 226 of the groove so that body 10 is always retained exactly in the same angular position.

As soon as duct 4 is opened, generator 91 is energized by propeller 80 and the counting sequence of the retention time starts as soon as a minimum voltage is generated thereby. Ring body 242 takes up an adjusted angular position in which magnet 243 through one of the twelve iron discs 241 closes one of the twelve reed contacts on print 89, which reed contact determines a specific delay time stored in the memory on print 89. In this case there are twelve different retention times possible, one for each angular position of magnet 243. Of course, there may be more than one magnet 243 giving combinations to increase the number of possible retention times. At the end of the chosen retention time, the generator voltage is allowed to energize solenoid 85 thus opening valve 84. In the position shown in Fig. 9 the fluid pressure in duct 1 acting from the left is allowed to enter bores 237 and 235 through helical groove 225 along sealing ring 223. This pressure passes from bore 235 along valve 84, now open, to bore 234, and thus it pushes piston 232 to the right, moving rollers 230 to the right to liberate the fins 95, which are now pushed inward by edge 229. The plug body 10 is thus allowed to continue its movement through the duct and valve body 8 closes port 4. Pin 227 is automatically pushed inward from groove 225.

In all the embodiments showing a propeller such as 80 to drive a generator it is possible to determine the retention time depending on the number of revolutions of this propeller. This number may be counted as such or the voltage generated by the generator may be used as a measure for the propeller speed to be time integrated to find the total number of revolutions. In such systems the opening time at each valve station may not be at a constant value but be proportional to the quantity of fluid pumped into the main conduit per unit time, so that always the same quantity of fluid is discharged at a certain valve station.

## Claims

1. A distribution device for a fluid such as water, comprising a main conduit communicating with valve stations (5, 6, 7) for outlets (2, 3, 4) from the main conduit (1) each adapted to be individually closed by a valve (8), and a plug body (10) adapted to move through the conduit (1) for opening each valve (8) sequentially for a period of time depending upon the retention time of the body (10) at a valve station, in which the plug body (10) and each valve station (5, 6, 7) have cooperating means (8, 9, 12, 50, 51, 95, 133) part of which are expandable radially in the conduit (1) with respect to each other so as in a protruding position to retain the plug body (10) in the valve station (5, 6, 7) and in a radially retracted position to allow the plug body (10) to leave the valve station (5, 6, 7), said device comprising mutually cooperating means (22, 24, 25, 56, 59, 60, 70, 71, 88, 89, 242, 243) for determining the retention time of the body (10) at a valve (8) and thus the opening period of each valve in each valve station (5, 6, 7), including means to adjust said opening period, operating on said radially expandable means (8, 9, 12, 50, 51, 95, 133), there being a valve (18, 83, 84) in the plug body (10) in the path of a fluid cooperating with the radially movable means (12, 50, 51, 133, 95) for influencing the operation of such means, characterized in that said means (22, 24, 25, 56, 59, 60, 70, 71, 89, 100—133, 241) for determining the said retention time of the plug body (10) include means (29, 24, 56, 70, 71, 85) to open or close said valve (18, 83, 84) in the plug body (10) under delay control of a programmed memory (103, 109, 110, 243) fed with the required adjusted retention time for the plug body (10) in the concerning valve station (5, 6, 7) so as to adjust said retention time individually for each station.

2. A distribution device according to claim 1, characterized in that the radially expandable means are formed by one or more flexible envelopes (12, 50, 51) surrounding the plug body (10) between its ends.

3. A distribution device according to claim 1, characterized in that the radially expandable means are formed by a flexible envelope (133) forming the front of the plug body (10).

4. A distribution device according to claim 1, claim 2 or claim 3, having in each station (5, 6, 7) a part (53, 224) associated with the station valve (8) wider than the inner section of the main conduit (1) for engagement by the radially expandable means (50, 51) to open said station valve (8).

5. A distribution device according to claim 4, characterized in that the radially expandable means are formed by one or more flexible envelopes (50, 51) having an own elasticity such that it (they) tends (tend) to return to a shape with an outer diameter about equal to the inner diameter of the main conduit (1).

6. A distribution device according to any of claims 1 to 5, characterized in that the plug body (10) has two sealing parts (96, 97, 238, 239) for sealing it in the main conduit (1) in two points at an axial distance, that there is an inlet (221, 237) for fluid from the main conduit (1) into the plug body (10) between said sealing parts (96, 97, 238, 239) and that said inlet (221, 237) gives access to a movable surface (98, 99, 232) to urge the radially expandable means (95) in one direction, there being a bypass groove (218, 226) or the like in each valve station (5, 6, 7) which when passed by the sealing parts (96, 97, 238, 239) when the plug body (10) enters the valve station (5, 6, 7) brings this inlet (221, 237) in communication first with the pressure of the fluid in the main conduit (1) downstream of the plug body (10) and, on further movement thereof, with said pressure upstream of the plug body (10).

7. A distribution device according to any of claims 1, 4 or 6, characterized in that the radially expandable means are radially movable fins (95) driven outwardly from the plug body (10) by operating means (98, 99, 200, 202, 210, 230, 232, 233) in the plug body (10) under control for movement in at least one direction of movement by said opening period determining means (89, 242, 243).

8. A distribution device according to claim 7, characterized in that said operating means include a piston or bellows (98, 204, 232), which, when sliding in the axial direction of the plug body (10), cooperates with a key structure (200, 202, 230), in one axial position of said piston or bellows (98, 204, 232) penetrating between the fins (95) and forcing or keeping them radially expanded to keep the plug body (10) in position in a valve station (5, 6, 7), and in another axial position allowing the fins (95) to move radially inwards to liberate the plug body (10) from the valve station (5, 6, 7) for further movement through the main conduit (1).

9. A distribution device according to claim 8, characterized in that the said piston or bellows (98), is provided with a screw-threaded part (99) engaging the key structure (200, 202) to rotate it about the axis of the plug body (10) to move it between a position keeping the fins (95) radially expanded and a position allowing them to move radially inwards.

10. A distribution device according to claim 6 and 7, 8 or 9, characterized in that the pressure of the fluid in the main conduit (1), if allowed to the space between the two sealing parts (96, 97, 238, 239) and acting on the said movable surface (98, 99, 232) urges this surface to a position liberating the fins (95) for radially inward movement and moves this surface (98, 99 232) to this position if a valve (84) operated by the opening period determining means (89, 242, 243) is operated to allow this.

11. A distribution device according to claims 8 or 9 and 10, characterized in that a spring (210, 233) operates on the key structure (200, 202, 230) to urge it towards the position to keep the fins (95) radially expanded, there being a check valve (212, 236) for the fluid to one side of the movable surface (98, 99, 232) to allow flow of fluid therethrough to allow for this spring (210, 233) to move the key structure (200, 202, 230) to said position. said flow of fluid through the check valve (212, 236) being in a direction opposite to the direction of the flow of fluid if said valve (84) operated by the opening period determining means (89, 242, 243) is opened.

12. A distribution device according to claim 11, characterized in that the check valve (212) is mounted to open the fluid path between two sides of the movable surface (204).

13. A distribution device according to claim 11, characterized in that the check valve (236) is mounted to open the fluid path from one side of the movable surface (232) towards the space (224) around the plug body (10) between the sealing parts (238, 239) if the pressure in said space (224) is the pressure downstream of the plug body (10).

14. A distribution device according to any of claims 8 to 13, characterized in that the key structure (200, 202, 230) carries freely rotatable rollers (202, 230) in a slot (201, 231) to contact the fins (95) and each other.

15. A distribution device according to any of the preceding claims, characterized in that the means for determining the opening period comprise a programmable delay unit (89, 122—133) carried by the plug body (10).

16. A distribution device according to any of the preceding claims, characterized in that each valve station (5, 6, 7) has addressing means (241, 242, 243) selectively cooperating with counting means such as a programmable delay unit (89) carried by the plug body (10) to determine the opening period.

17. A distribution device according to claim 16, characterized in that at each valve station (5, 6, 7) there is a helical guide member (225, 226) in the wall (224) thereof, that the plug body (10) has a cooperating guide member (227) so as to move the plug body (10) to an angular position accurately determined by said guide members (225, 226, 227) when moving into the valve station (5, 6, 7) and that the addressing means (241, 242, 243) in the valve station (5, 6, 7) are adjusted by selecting an angular position thereof.

18. A distribution device according to claim 17, characterized in that said addressing means are constituted by an annular body (242) rotatable about its axis coincident with the axis of the plug body (10) and carrying a magnet structure (243) to select magnetically from a number of opening periods stored in the plug body (10) around its periphery.

19. A distribution device according to any of the preceding claims, characterized in that the plug body (10) has a fluid pressure sensitive switch (215) allowing operation of the opening period determining means (98, 99, 200, 202, 210) only if the fluid pressure in the main conduit (1) is at least at a minimum value.

20. A distribution device according to any of the preceding claims, characterized in that the plug body (10) carries an electric generator (26, 91) for supplying a voltage to electric means (22, 56, 85, 89) therein, operated by a propeller (80) rotated by the fluid passing from the main conduit (1) through the opened valve (8) in a valve station (5, 6, 7) in which the plug body (10) is retained.

21. A distribution device according to claim 20, characterized in that the plug body (10) is provided with counting means for the number of revolutions of the propeller (80) in the opening period determining means (22, 24, 25, 56, 59, 60, 70, 71, 88, 89, 242, 243) to determine this period by this number of revolutions.

22. A distribution device according to claim 20 or claim 21, characterized in that the retaining means for the plug body (10) in each valve station (5, 6, 7) will only be allowed to function if the voltage supplied by the generator (26, 91) is above a predetermined threshold level.

23. A distribution device according to claim 15 and any of the other preceding claims, characterized in that the programmable delay unit (89, 122—133) comprises a memory (133) with a number of addressable positions loaded with delay time values corresponding each with a specific valve station (5, 6, 7), a time counting circuit with a presettable counter (124, 125) and a clock pulse generator (126) which delivers clock pulses of fixed repetition rate for stepping the counter down from the preset value to zero, and a controller (123) for addressing in each valve station (5, 6, 7) the position in the memory (133) corresponding with said valve station (5, 6, 7) to read the delay time value stored in said position, and means for delivering said delay time value as preset value to the presettable counter (124, 125).

24. A distribution device according to claim 15 and any of the other preceding claims, characterized in that a programming unit (100—111) is installed in a separate programming station or in one of the valve stations (5, 6, 7) in which the plug body (10) if necessary will be retained for storing new delay time values into the memory (133) or changing stored delay time values.

25. A distribution device according to claim 24, characterized in that photo-sensitive and light emitting devices, or ultrasonic transducers or electromagnetic transmitters and receivers are provided to transmit data between the programming unit (100—111) and the delay unit in the plug body (10).

26. A distribution device according to any of the preceding claims, characterized in that in one or more parking stations for the plug body (10) the duct containing it is transparent and that the plug body (10) has photosensitive means to charge a battery (90) in the plug body (10).

27. A distribution device according to any of the preceding claims, characterized in that a movable wall (86, 204) in the plug body (10), moved by a fluid depending on the entry of the plug body (10) into a valve station (5, 6, 7), carries a magnet (88, 217) reporting this entry to electric means (89) in the plug body (10) to mark the beginning of counting of the retention time therein.

28. A distribution device according to any of the preceding claims, characterized in that the main conduit (1) forms a closed loop and that it has a reservoir (35) near pumping means (28) for pumping fluid into the main conduit (1), said reservoir (35) taking up fluid displaced from the main conduit (1) by the front of the moving plug body (10) while being moved by the pressure of the fluid from the pumping means (28) and means (40) to feed the fluid from the reservoir (35) to the pumping means (28).

29. A distribution device according to claim 28, characterized in that there are two discharge openings (at 33 and 34) from the main conduit (1) to the said reservoir (35) and two inlet openings (at 30 and 31) for the fluid from the pumping means (28) into the main conduit (1), at distances from each other and with valves (33', 43, 47) and switching means (41, 42, 44, 45, 46) so that the plug body (10) is allowed to pass an upstream discharge opening (at 34) and inlet opening (at 31) while they are closed and the more downstream inlet and discharge openings (at 30 and 33 resp.) are open, after which the downstream openings (30, 33) are closed and the upstream openings (31, 34) are opened.

30. A distribution device according to claim 29, characterized in that sensing means (44, 48) in the main conduit (1) determine the position of the plug body (10) to operate valves (41, 42) in the main conduit (1) to separate the two upstream (31, 34) or the two downstream openings (33', 47) and to operate valves (43, 47, 33') in the said inlet and discharge openings (31, 33, 34, 47) to open and close them.

## Patentansprüche

1. Eine Verteilvorrichtung für ein Strömungsmedium wie Wasser, umfassend eine Hauptrohrleitung, in Verbindung mit Ventilstationen (5, 6, 7) für Auslässe (2, 3, 4) aus der Hauptleitung (1), jede geeignet um individuell von einem Ventil (8) geschlossen zu werden, und ein Verschlusskörper (10), geeignet um durch die Leitung (1) zu bewegen zum Oeffnen jedes Ventils (8) in Reihenfolge während einer Zeitspanne abhängig der Festhaltezeit des Verschlusskörpers (10) in einer Ventilstation, wobei der Verschlusskörper (10) und jede Ventilstation (5, 6, 7) zusammenarbeitende Mittel (8, 9, 12, 50, 51, 95, 133) haben, teilweise radial aussetzbar in der Leitung (1) mit Rücksicht auf einander um in einer ausragenden Lage den Verschlusskörper (10) in der Ventilstationen (5, 6, 7) festzuhalten und um in einer radial zurückgezogenen Lage den Verschlusskorper (10) zu gestatten die Ventilstation (5, 6, 7) zu verlassen, welche Vorrichtung mit einander zusammenarbeitende Mittel (22, 24, 25, 56, 59, 60, 70, 71, 88, 89, 242, 243) hat zur Bestimmung die Festhaltezeit des Körpers (10) an einem Ventil (8) und deshalb die Oeffnungsperiode jedes Ventils in jeder Ventilstation (5, 6, 7), umfassend Mittel zur Einstellung dieser Oeffnungsperiode, arbeitend auf genannter radial aussetzbaren Mitteln (8, 9, 12, 50, 51, 95, 133), wobei es ein Ventil (18, 83, 84) im Verschlusskorper (10) in der Bahn eines Strömungsmediums gibt, zusammenarbeitend mit den radial bewegbaren Mitteln (12, 50, 51, 133, 95) zum Beeinflussen der Wirkung solcher Mittel, dadurch gekennzeichnet, dass diese Mittel (22, 24, 25, 56, 59, 60, 70, 71, 89, 100—133, 241) zur Bestimmung der genannten Festhaltezeit des Verschlusskorpers (10) Mittel (29, 24, 56, 70, 71, 85) umfassen zur Oeffnung oder Schliessung jenes Ventils (18, 83, 84) im Verschlusskorper (10) unter Verzögerungssteuerung eines programmierten Speichers (103, 109, 110, 243), worin die geforderte eingestellte Festhaltezeit für den Verschlusskorper (10) in der betreffenden Ventilstation (5, 6, 7) eingeschrieben ist zur individuellen Einstellung dieser Festhaltezeit für jede Station.

2. Eine Verteilvorrichtung nach Anspruch 1, dadurch gekennzeichnet, dass die radial aussetzbaren Mittel von einer oder mehreren flexibelen Umhüllungen (12, 50, 51) gebildet werden, welche den Verschlusskorper (10) zwischen seinen Enden umgeben.

3. Eine Verteilvorrichtung nach Anspruch 1, dadurch gekennzeichnet, dass die radial aussetzbaren Mittel von einer flexibelen Umhüllung (133) gebildet werden, welche die Vordersetie des Verschlusskorpers (10) bildet.

4. Eine Verteilvorrichtung nach Anspruch 1, Anspruch 2 oder Anspruch 3, welche in jeder Station (5, 6, 7) einen Teil (53, 224) hat, zum Ventil (8) der Station gehörend und breiter als der Innendurchschnitt der Hauptleitung (1) zur Angreifung von den radial aussetzbaren Mitteln (50, 51) zur Oeffnung dieses Stationsventils (8).

5. Eine Verteilvorrichtung nach Anspruch 4, dadurch gekennzeichnet, dass die radial aussetzbaren Mittel von einer oder mehreren flexibelen Umhüllungen (50, 51) gebildet werden, welche eine eigene Elastizität haben derart dass sie dazu neigt (neigen) zu einer Form zurückzukehren mit einem Aussendurchmesser ungefähr gleich dem Innendurchmesser der Hauptleitung (1).

6. Eine Verteilvorrichtung nach einem der Ansprüche 1 bis 5, dadurch gekennzeichnet, dass der Verschlusskorper (10) zwei Abdichtteile (96, 97, 238, 239) hat um ihn in der Hauptleitung (1) abzudichten in zwei Punkten in einem axialen Abstand, dass es ein Einlass (221, 237) für Strömungsmedium aus der Hauptleitung (1) bis in den Verschlusskörper (10) zwischen diesen Abdichtteilen (96, 97, 238, 239) gibt und dass dieser Einlass (221, 237) Zugang gibt zu einer beweglichen Oberflache (98, 99, 232) um die radial aussetzbaren Mittel (95) in eine Richtung zu drängen, dass eine Umgehungsnute (218, 226) o.d. in jeder Ventilstation (5, 6, 7) anwesend ist, welche, wenn sie von den Abdichtteilen (96, 97, 238, 239) passiert wird beim Eintreten des Verschlusskörpers (10) in die Ventilstation (5, 6, 7), diesen Einlass (221, 237) zuerst in Verbindung bringt mit dem Druck des Mediums in der Hauptleitung (1) stromabwärts des Verschlusskörpers (10) und, bei weiterer Bewegung davon, mit dem besagten Druck stromaufwärts des Verschlusskörpers (10).

7. Eine Verteilvorrichtung nach einem der Ansprüche 1, 4, oder 6, dadurch gekennzeichnet, dass die radial aussetzbaren Mittel radial bewegliche Flossen (95) sind, auswärts mit Rücksicht auf dem Verschlusskörper (10) getrieben von Betätigungsmitteln (98, 99, 200, 202, 210, 230, 232, 233) im Verschlusskörper (10) unter Bewegungssteuerung in wenigstens einer Bewegungsrichtung von den genannten Mitteln (89, 242, 243) zur Bestimmung der Oeffnungsperiode.

8. Eine Verteilvorrichtung nach Anspruch 7, dadurch gekennzeichnet, dass die genannten Betätigungsmittel einen Kolben oder Balg (98, 204, 232) umfassen, welcher, beim Gleiten in der axialen Richtung des Verschlusskörpers (10), zusammenarbeitet mit einer Riegelkonstruktion (200, 202, 230), welche in einer axialen Lage dieses Kolbens oder Balgs (98, 204, 232) zwischen den Flossen (95) hineindringt und diese in den radial ausgesetzten Zustand zwingt oder hält um den Verschlusskörper (10) in seiner Lage in einer Ventilstation (5, 6, 7) zu halten und in einer anderen axialen Lage die Flossen (95) freilässt um radial nach innen zu bewegen um den Verschlusskörper (10) aus der Ventilstation (5, 6, 7) zu befreien für weitere Bewegung durch die Hauptleitung (1).

9. Eine Verteilvorrichtung nach Anspruch 8, dadurch gekennzeichnet, dass dieser Kolben oder Balg (98) mit einem Schraubengewindeteil (99) versehen ist, welche an der Riegelkonstruktion (200, 202) angreift um diese zu drehen um die Achse des Verschlusskörpers (10) um diese Konstruktion zu bewegen zwischen einer Lage worin sie die Flossen (95) radial ausgesetzt hält und eine Lage worin sie diesen erlaubt radial nach innen zu bewegen.

10. Eine Verteilvorrichtung nach Anspruch 6 und 7, 8 oder 9, dadurch gekennzeichnet, dass der Druck des Mediums in der Hauptleitung (1), wenn zugelassen zu dem Raum zwischen den zwei Abdichtteilen (96, 97, 238, 239) und arbeitend auf die genannte bewegliche Oberfläche (98, 99, 232), diese Oberfläche zu einer Lage drängt, in welcher die Flossen (95) befreit sind um radial nach innen zu bewegen, und diese Oberfläche (98, 99, 232) zu dieser Lage bewegt nachdem ein Ventil (84), betätigt von den Mitteln (89, 242, 243) zur Bestimmung der Oeffnungsperiode, betätigt ist um dies zu erlauben.

11. Eine Verteilvorrichtung nach Anspruch 8 oder 9 und 10, dadurch gekennzeichnet, dass eine Feder (210, 233) auf die Riegelkonstruktion (200, 202, 230) arbeitet um diese zu der lage zu drängen, in welcher sie die Flossen (95) radial ausgesetzt hält, wobei ein Rückschlagventil (212, 236) für das Medium zu einer Seite der beweglichen Oberläche (98, 99, 232) anwesend ist um dessen Strömung dadurch zu erlauben um es dieser Feder (210 233) zu ermöglichen die Riegelkonstruktion (200, 202, 230) zu dieser Lage zu bewegen, welche Mediumströmung durch das Rückschlagventil (212, 236) in einer Richtung stattfindet entgegengesetzt zur Richtung welche die Mediumströmung hat wenn das genannte Ventil (84), betätigt von den Mitteln (89, 242, 243) zur Bestimmung der Oeffnungsperiode geöffnet ist.

12. Eine Verteilvorrichtung nach Anspruch 11, dadurch gekennzeichnet, dass das Rückschlagventil (212) so montiert ist dass es die Strömungsbahn des Mediums zwischen beiden Seiten der beweglichen Oberfläche (204) öffnet.

13. Eine Verteilvorrichtung nach Anspruch 11, dadurch gekennzeichnet, dass das Rückschlagventil (236) so montiert ist dass es die Mediumströmungsbahn von einer Seite der beweglichen Oberfläche (232) zu dem Raum (224) ringsum den Verschlusskörper (10) zwischen den Abdichtteilen (238, 239) öffnet falls der Druck in dem genannten Raum (224) gleich dem Druck stromabwärts des Verschlusskörpers (10) ist.

14. Eine Verteilvorrichtung nach einem der Ansprüche 8 bis 13, dadurch gekennzeichnet, dass die Riegelkonstruktion (200, 202, 230) frei drehbare Rollen (202, 230) in einem Schlitz (201, 231) trägt um mit den Flossen (95) und mit einander in Kontakt zu treten.

15. Eine Verteilvorrichtung nach einem der vorgehenden Ansprüche, dadurch gekennzeichnet, dass die Mittel zur Bestimmung der Oeffnungsperiode eine programmierbare Verzögerungseinheit (89, 122—133) umfassen, von dem Verschlusskorper (10) getragen.

16. Eine Verteilvorrichtung nach einem der vorgehenden Ansprüche, dadurch gekennzeichnet, dass jede Ventilstation (5, 6, 7) Adressiermittel (241, 242, 243) hat, welche selektiv mit Zählermitteln z.B. mit einer programmierbaren Verzögerungseinheit (89), vom Verschlusskörper (10) getragen, zusammenarbeiten um die Oeffnungsperiode zu bestimmen.

17. Eine Verteilvorrichtung nach Anspruch 16, dadurch gekennzeichnet, dass es in jeder Ventilstation (5, 6, 7) ein teilweise schraubenförmiges Leitorgan (225, 226) in der Wand (224) davon gibt, dass der Verschlusskorper ein damit zusammen arbeitendes Leitorgan (227) hat um den Verschlusskorper (10) zu einer axialen Lage, genau von diesen Leitorganen (225, 226, 227) bestimmt, zu bewegen wenn er in die Ventilstation (5, 6, 7) bewegt und dass die Adressiermittel (241, 242, 243) in der Ventilstation (5, 6, 7) einstelbar sind durch Wahl einer Winkellage dieses Körpers (10).

18. Eine Verteilvorrichtung nach Anspruch 17, dadurch gekennzeichnet, dass die Adressiermittel von einem ringförmigen Körper (242) gebildet werden, drehbar um seine Achse welche mit der Achse des Verschlusskörpers (10) zusammenfällt, und eine Magnetkonstruktion (243) tragend, um magnetisch aus einer Anzahl von Oeffnungsperioden, aufgeschlagen in dem Verschlusskörper (10) um seinen Umfang herum zu wählen.

19. Eine Verteilvorrichtung nach einem der vorgehenden Ansprüche, dadurch gekennzeichnet, dass der Verschlusskorper (10) einen auf den Druck des Strömungsmittels reagierenden Schalter (215) hat, welcher die Wirkung der Mittel (98, 99, 200, 202, 210) zur Bestimmung der Oeffnungsperiode nur zulässt falls der Mediumdruck in der Hauptleitung (1) mindestens einen Mindestwert hat.

20. Eine Verteilvorrichtung nach einem der vorgehenden Ansprüche, dadurch gekennzeichnet, dass der Verschlusskörper (10) einen elektrischen Generator (26, 91) trägt um eine elektrische Spannung elektrischen Mitteln (22, 56, 85, 89) darin zuzuführen, welche Mittel von einer Schraube (80) betätigt werden, welche von Strömungsmedium gedreht wird, welches aus der Hauptleitung (1) durch den geöffneten Ventil (8) in einer Ventilstation (5, 6, 7), worin der Verschlusskörper (10) festgehalten wird, passiert.

21. Eine Verteilvorrichtung nach Anspruch 20, dadurch gekennzeichnet, dass der Verschlusskorper (10) mit Zählermitteln für die Drehzahl der Schraube (80) in den Mitteln (22, 24, 25, 56, 59, 60, 70, 71, 88, 89, 242, 243) zur Bestimmung der Oeffnungsperiode versehen ist um diese Periode durch diese Anzahl der Umdrehungen zu bestimmen.

22. Eine Verteilvorrichtung nach Anspruch 20 oder Anspruch 21, dadurch gekennzeichnet, dass die Festhaltemittel für den Verschlusskörper (10) in jeder Ventilstation (5, 6, 7) nur freigegeben werden um zu arbeiten falls die elektrische Spannung, vom Generator (26, 91) geliefert, höher ist als ein vorbestimmtes Schwellenniveau.

23. Eine Verteilvorrichtung nach Anspruch 15 und einem der anderen vorgehenden Ansprüche, dadurch gekennzeichnet, dass die programmierte Verzögerungseinheit (89, 122—133) einen Speicher (133) umfasst mit einer Anzahl von adressierbaren Speicherstellen, worin Verzögerungszeitwerte, jede übereinstimmend mit je einer bestimmten Ventilstation (5, 6, 7) eingeschrieben sind, eine Zeitzählschaltung mit einem voreinstellbaren Zähler (124, 125) und ein Taktpulsgenerator (126), welcher Taktpulsen mit fester Wiederholungsfrequenz liefert für hinunterzählen des Zählers von dem voreingestellten Wert bis Null, und eine Steuereinheit (123) womit in dieser Verzögerungszeitwert als Voreinstellwert an den voreinstellbaren Zähler (124, 125) zugeführt wird.

24. Eine Verteilvorrichtung nach Anspruch 15 und einem der anderen vorgehenden Ansprüche, dadurch gekennzeichnet, dass eine Programmiereinheit (100, 111) in einer separaten Programmierstation oder in einer der Ventilstationen (5, 6, 7), in welcher der Verschlusskörper (10) wenn notwendig festgehalten wird, installiert worden ist um neue Verzögerungszeitwerte in den Speicher (133) abzuspeichern oder zur Aenderung gespeicherter Verzögerungszeitwerte.

25. Eine Verteilvorrichtung nach Anspruch 24, dadurch gekennzeichnet, dass lichtempfindliche und lichtausstrahlende Vorrichtungen oder Ultrasonumwandler oder elektromagnetische Seude- und Empfangsvorrichtungen anwesend sind um Daten zwischen der Programmiereinheit (100—111) und der Verzögerungseinheit im Verschlusskörper (10) zu übertragen.

26. Eine Verteilvorrichtung nach einem der vorgehenden Ansprüche, dadurch gekennzeichnet, dass in einer oder mehreren Parkierstationen für den Verschlusskörper (10) die Leitung, welche ihn enthält, transparant ist und dass der Verschlusskörper (10) lichtempfindliche Mittel hat um eine Batterie (90) in dem Verschlusskorper (10) aufzuladen.

27. Eine Verteilvorrichtung nach einem der vorgehenden Ansprüche, dadurch gekennzeichnet, dass eine bewegliche Wand (86, 204) im Verschlusskörper (10), von einem Strömungsmittel bewegt in Abhängigkeit des Eintritts des Verschlusskörpers (10) in eine Ventilstation (5, 6, 7), einen Magneten (88, 217) trägt, welcher diesen Eintritt an elektrische Mittel (89) im Verschlusskörper (10) signaliert zur Markierung des Anfangs des Zählers der Festhalteperiode darin.

28. Eine Verteilvorrichtung nach einem der vorgehenden Ansprüche, dadurch gekennzeichnet, dass die Hauptleitung (1) eine geschlossene Schleife bildet und dass sie einen Behälter (35) in der Nähe von Pumpmitteln (28) hat um Medium in die Hauptleitung (1) zu pumpen, welcher Behälter (35) Medium aufnimmt, welches aus der Hauptleitung (1) versetzt wird von der Vorderseite des bewegenden Verschlusskörpers (10) wenn dieser vom Druck des Mediums aus den Pumpmitteln (28) bewegt wird, und Mittel (40) um das Medium aus dem Behälter (35) zu den Pumpmitteln (28) zu speisen.

29. Eine Verteilvorrichtung nach Anspruch 28, dadurch gekennzeichnet, dass es zwei Auslassöffnungen (bei 33 und 34) aus der Hauptleitung (1) zu dem genannten Behälter (35) gibt und zwei Einlassöffnungen (bei 30 und 31) für das Medium aus den Pumpmitteln (28) in die Hauptleitung (1), in Abständen voneinander und mit Ventilen (33', 43, 47) und Schaltmitteln (41, 42, 44, 45, 46), derart dass der Verschlusskörper (10) eine stromaufwärts liegende Auslassöffnung (bei 34) und Einlassöffnung (bei 31) passieren während diese geschlossen sind und die mehr stromabwärts liegende Einlass- und Auslassöffnungen (bei 30 bzw. 33) offen sind, worauf die stromabwärtsen Oeffnungen (30, 33) geschlossen werden und die stromaufwärtsen Oeffnungen (31, 34) geöffnet werden.

30. Eine Verteilvorrichtung nach Anspruch 29, dadurch gekennzeichnet, dass Abtastmittel (44, 48) in der Hauptleitung (1) die Lage des Verschlusskörpers (10) in der Hauptleitung bestimmen um Ventile (41, 42) zu betätigen um die zwei stromaufwärsten Oeffnungen (31, 34) oder die zwei stromabwärtsen (33', 47) zu trennen und Ventile (43, 47, 33') in den genannten Einlass- und Auslassöffnungen (31, 33, 34, 47) zu betätigen um letztere zu öffnen und zu schliessen.

## Revendications

1. Un dispositif de distribution d'une fluide comme de l'eau, contenant un conduit principal dans communication avec des stations d'obturation (5, 6, 7) pour des sorties (2, 3, 4) du conduit principal (1), chacune adaptée à être obturée individuellement par une soupape (8), et une navette (10) adapté à mouvoir par le conduit (1) pour ouvrir chaque soupape (8) en séquence pendant une période de temps dépendante de la période de temps de retention de la navette (10) à chaque d'obturation, dans lequel la navette (10) et chaque station d'obturation (5, 6, 7) ont des moyens coopérants (8, 9, 12, 50, 51, 95, 133) desquels une partie est expansible radialement dans le conduit (1) en rapport les uns aux autres à l'effet de retenir la navette (10) dans la station d'obturation (5, 6, 7) dans une position saillante et d'admettre la navette (10) de sortir de la station d'obturation (5, 6, 7) dans une position radialement retirée, lequel dispositif comprend des moyens de coopération mutuelle (22, 24, 25, 56, 59, 60, 70, 71, 88, 89, 242, 243) pour déterminer la période de retention de la navette (10) à une soupape (8) et par la la période d'ouverture de chaque soupape dans chaque station (5, 6, 7) d'obturation, y inclus des moyens pour ajuster cette période d'ouverture, opérants sur ces moyens expansibles radialement (8, 9, 12, 50, 51, 95, 133), une soupape (18, 83, 84) étant pourvue dans la navette (10) dans la voie d'un fluide coopérant avec les moyens (12, 50, 51, 133, 95) mobiles radialement pour influencer l'opération de ces moyens, caractérisé en ce que ces moyens (22, 24, 25, 56, 60, 70, 71, 89, 100—133, 241) pour déterminer la période de retention de la navette (10) comprennent des moyens (29, 24, 56, 70, 71, 85) pour ouvrir ou obturer cette soupape (18, 83, 84) dans la navette (10) sous controle du délai d'une mémoire programmée (103, 109, 110, 243) nourrie de la période requirée et ajustée de retention pour la navette (10) dans la station d'obturation concernante (5, 6, 7) de manière à ajuster cette période de retention pour chaque station.

2. Un dispositif de distribution selon revendication 1, caractérisé en ce que les moyens expansibles radialement sont formés par une ou plusieurs enveloppes flexibles (12, 50, 51) entourant la navette entre ses bouts.

3. Un dispositif de distribution selon revendication 1, caractérisé en ce que les moyens expansibles radialement sont formés par une enveloppe flexible (133) formant le tête de la navette (10).

4. Un dispositif de distribution selon la revendication 1, revendication 2 ou revendication 3, ayant dans chaque station (5, 6, 7) une partie (53, 224), associé à la soupape (8) de la station, plus large que la section intérieure du conduit principal (1) pour engagement par les moyens expansibles radialement (50, 51) pour ouvrir cette soupape (8) de la station.

5. Un dispositif de distribution selon revendication 4, caractérisé en ce que les moyens radialement expansibles sont formés par une ou plusieurs enveloppes (50, 51) ayant une propre élasticité ainsi qu'elle (elles) tend (tendent) à retourner à une forme avec un diamètre extérieur sensiblement égal au diamètre intérieur du conduit principal (1).

6. Un dispositif de distribution selon l'une quelconque des revendications 1 à 5, caractérisé en ce que la navette (10) a deux parties d'étanchéité (96, 97, 238, 239) pour faire cela étanche dans le conduit principal (1) en deux points à une distance axiale, qu'il y a une entrée (221, 237) pour fluide du conduit principal (1) dans la navette (10) entre ces parties d'étanchéité (96, 97, 238, 239) et que cette entrée (221, 237) donne accès à une surface mobile (98, 99, 232) pour pousser les moyens radialement expansibles (95) dans une direction, il y étant une rainure de détournement (218, 226) ou similaire dans chaque station d'obturation (5, 6, 7), laquelle, comme dépassée par les parties d'étanchéité (96, 97, 238, 239) pendant que la navette (10) entre la station d'obturation (5, 6, 7), met cette entrée (221, 237) en communication en premier lieu avec la pression du fluide dans le conduit principal (1) à l'aval de la navette (10) et, par mouvement continue de celle-ci, avec ladite pression à lamont de la navette (10).

7. Un dispositif de distribution selon l'une quelconque des revendications 1, 4 ou 6, caractérisé en ce que les moyens radialement expansibles sont des nageoires (95) mobiles radialement et poussées vers l'extérieur en rapport à la navette (10) par des moyens d'opération (98, 99, 200, 202, 210, 230, 232, 233) dans la navette (10) sous commande pour mouvoir en au moins une direction de mouvement par ces moyens (89, 242, 243) pour déterminer cette période d'ouverture.

8. Un dispositif de distribution selon revendication 7, caractérisé en ce que ces moyens d'opération comprennent un piston ou soufflet (94, 204, 232), lequel, en glissant dans la direction axiale de la navette (10), coopère avec une construction à clavette (200, 202, 203), qui dans une position axiale de ce piston ou soufflet (98, 204, 232) pénètre entre les nageoires (95) es les pousse ou maintient dilatées radialement pour maintenir la navette (10) dans sa position dans une station d'obturation (5, 6, 7), et dans une autre position axiale permet les nageoires (95) à mouvoir radialement vers l'intérieur pour libérer la navette (10) de la station d'obturation (5, 6, 7) pour mouvement continuée par le conduit principal (1).

9. Un dispositif de distribution selon revendication 8, caractérisé en ce que ledit piston ou soufflet (98) est pourvu d'une partie filitée (99) engageant la construction à clavette (200, 202) pour la tourner autour de l'axe de la navette (10) pour la mouvoir entre une position maintenant les nageoires (95) dilatées radialement et une position les permettant de mouvoir radialement vers l'intérieur.

10. Un dispositif de distribution selon revendication 6 et 7, 8 ou 9, caractérisé en ce que la pression du fluide dans le conduit principal (1), si admis à l'espace entre les deux parties d'étanchéité (96, 97, 238, 239) et opérant sur ladite surface mobile (98, 99, 232) pousse cette surface vers une position libérant les nageoires (95) pour mouvement radialement vers l'intérieur et ment cette surface (98, 99, 232) à cette position si un obturation (84) opéré par les moyens pour déterminer la période d'ouverture (89, 242, 243) est opéré pour permettre cela.

11. Un dispositif de distribution selon revendications 8 ou 9 et 10, caractérisé en ce qu'un ressort (210, 233) travaille sur la construction à clavette (200, 202, 230) pour la pousser vers la position pour maintenir les nageoires (95) dilatées radialement, il y étant une soupape de retenue (212, 236) pour le fluide à l'un côté de la surface mobile (98, 99, 232) pour permettre courant de fluide par elle pour permettre ce ressort (210, 233) à mouvoir la construction à clavette (200, 202, 230) à cette position, lequel courant de fluide par la soupape de retenue (212, 236) étant dans une direction opposée à la direction du courant de fluide si cette soupape (84), opérée par les moyens pour déterminer la période d'ouverture (89, 242, 243) est ouverte.

12. Un dispositif de distribution selon revendication 11, caractérisé en ce que la soupape de retenue (212) est montée pour ouvrir la voie de fluide entre deux côtés de la surface mobile (204).

13. Un dispositif de distribution selon revendication 12, caractérisé en ce que la soupape de retenue (236) est montée à ouvrir la voie de fluide d'un côté de la surface mobile (232) vers l'espace (224) autour de la navette (10) entre les parties d'étanchéité (238, 239) si la pression dans cet espace (224) est la pression à l'aval de la navette (10).

14. Un dispositif de distribution selon l'une quelconque des revendications 9 à 13, caractérisé en ce que la construction à clavette (200, 202, 230) porte des rouleaux (202, 230) tournables librement dans une fente (201, 230) pour contacter les nageoires (95) et l'un l'autre.

15. Un dispositif de distribution selon l'une quelconque des revendications précédentes, caractérisé en ce que les moyens pour déterminer la période d'ouverture comprennent un ensemble de délai programmable (89, 122—133) porté par la navette (10).

16. Un dispositif de distribution selon l'une quelconque des revendications précédentes, caractérisé en ce que chaque station d'obturation (5, 6, 7) a des moyens à adresser (241, 242, 243) coopérants sélectivement avec moyens à compter comme un ensemble (89) de délai programmable porté par la navette (10) pour déterminer la période d'ouverture.

17. Un dispositif de distribution selon revendication 16, caractérisé en ce que à chaque station d'obturation (5, 6, 7) il y a un organe de guidage partiellement hélicoïdal (225, 226) dans sa paroi (224), que la navette (10) a un organe de guidage (227) y coopérant pour mouvoir la navette (10) à une position angulaire précisément déterminée par ces organes de guidage (225, 226, 227) en entrant la station d'obturation (5, 6, 7) et que les moyens à adresser (241, 242, 243) dans la station d'obturation (5, 6, 7) sont ajustés par choisir une position angulaire de ces moyens.

18. Un dispositif de distribution selon revendication 17, caractérisé en ce que ces moyens à adresser sont constitués par un corps annulaire (242) tournable autour de son axe coincidant avec l'axe de la navette (10) et portant une construction d'aimants (243) pour choisir magnétiquement d'un nombre de périodes d'ouverture emmagasinées dans la navette (10) autour de sa périphérie.

19. Un dispositif de distribution selon l'une quelconque des revendications précédentes, caractérisé en ce que la navette (10) a un interrupteur (215) sensible à pression de fluide permettant opération des moyens (98, 99, 200, 202, 210) déterminant la période d'ouverture seulement si le fluide dans le conduit principal (1) a une valeur au moins minimale.

20. Un dispositif de distribution selon l'une quelconque des revendications précédentes, caractérisé en ce que la navette (10) porte un générateur électrique (26, 91) pour fournir un voltage à des moyens électriques (22, 56, 85, 89) là-dedans, opéré par une hélice (80) tournée par le fluide passant du conduit principal (1) à travers la soupape ouverte (8) dans une station d'obturation (5, 6, 7) dans laquelle la navette (10) est retenue.

21. Un dispositif de distribution selon revendication 20 caractérisé en ce que la navette (10) est pourvue de moyens de compte du nombre de tours de la hélice (80) dans les moyens pour déterminer la période d'ouverture (22, 24, 25, 56, 59, 60, 70, 71, 88, 89, 242, 243) pour déterminer cette période par ce nombre.

22. Un dispositif de distribution selon revendication 20 ou 21, caractérisé en ce que les moyens de retention pour la navette (10) dans chaque station d'obturation (5, 6, 7) seront seulement permis de fonctionner si le voltage fourni par le générateur (26, 91) surpasse un niveau déterminé de seuil.

23. Un dispositif de distribution selon revendication 15 et l'une quelconque des autres revendications précédentes, caractérisé en ce que l'ensemble de délai programmable (89, 122—133) comprend une mémoire (133) avec un nombre de positions adressables chargées de valeurs de périodes de délai chaqune correspondante à une station d'obturation (5, 6, 7) spécifique, un circuit de comptation de temps avec un compteur (124, 125) ajustable d'avance et un générateur de pulsations de temps (126) délivrant des pulsations de temps de vitesse de répétition fixée pour diminuer en pas le compteur (124, 125) de la valeur ajustable d'avance jusqu'à zéro, et un controleur (123) pour adresser dans chaque station d'obturation (5, 6, 7) la position dans la mémoire (133) correspondante à cette station d'obturation (5, 6, 7) pour lire la valeur de période de délai emmagisinée dans cette position, et des moyens pour délivrer cette valeur de période de délai comme valeur ajustée d'avance au compteur (124, 125) ajustable d'avance.

24. Un dispositif de distribution selon revendication 15 et l'une quelconque des autres revendications précédentes, caractérisé en ce qu'un ensemble (100, 111) de programmation est installé dans une station séparée de programmation ou dans une des stations d'obturation (5, 6, 7) dans laquelle la navette (10) si nécessaire sera retenue pour emmagasiner des nouvelles valeurs de périodes de délai dans la mémoire (133) ou pour changer des valeurs de périodes de délai emmagasinées.

25. Un dispositif de distribution selon revendication 24, caractérisé en ce que des dispositifs photosensitifs et émetteurs de lumière ou des transducteurs ultrasoniques ou transmetteurs et récepteurs électromagnétiques sont pourvus pour transmettre des données entre l'ensemble de programmation (100—111) et l'ensemble de délai dans la navette (10).

26. Un dispositif de distribution selon l'une quelconque des revendications précédentes, caractérisé en ce que dans une ou plusieurs stations de stationnement pour la navette (10) le conduit lui contenant est transparent et que la navette (10) a des moyens photosensitifs pour charger une pile (90) dans la navette (10).

27. Un dispositif de distribution selon l'une quelconque des revendications précédentes, caractérisé en ce qu'une paroi mobile (86, 204) dans la navette (10), mue par un fluide dépendant de l'entrée de la navette (10) dans une station d'obturation (5, 6, 7), porte un aimant (88, 217) qui signale cette entrée à des moyens électriques (89) dans la navette (10) pour marquer le commencement de comptage du temps de retention la-dedans.

28. Un dispositif de distribution selon l'une quelconque des revendications précédentes, caractérisé en ce que le conduit principal (1) forme un circuit fermé et qu'il a un réservoir (35) près de moyens de pompe (28) pour pomper du fluide dans le conduit principal (1, ce réservoir (35) recevant du fluide déplacé du conduit principal (1) par le front de la navette (10) mouvante tandis qu'elle est mue par la pression du fluide originante des moyens de pompe (28) et des moyens (40) pour fournir le fluide du réservoir (35) aux moyens de pompe (28).

29. Un dispositif de distribution selon revendication 28, caractérisé en ce qu'il y a deux orifices de décharge (à 33 et 34) du conduit principal (1) à ce réservoir (35) et deux orifices d'entrée (à 30 et 31) pour le fluide des moyens de pompe (28) dans le conduit principal (1), à des distances l'une de l'autre et avec des soupapes (33', 43, 47) et des moyens de commutation (41, 42, 44, 45, 46) ainsi que la navette (10) est permise de passer une orifice de décharge (à 34) et d'entrée (à 31) en amont tandis qu'elles sont fermées et les orifices d'entrée et de décharge (à 30 et 33 resp.) plus en aval sont ouvertes, après quoi les orifices en aval (30, 33) sont fermées et les orifices en amount (31, 34) sont ouvertes.

30. Un dispositif de distribution selon revendication 29 caractérisé en ce que des moyens d'observation (44, 48) dans le conduit principal (1) déterminent la position de la navette (10) pour opérer des soupapes (41, 42) dans le conduit principal (1) pour séparer les deux orifices en amont (31, 34) ou les deux orifices en aval (33', 47) et pour opérer des soupapes (43, 47, 33') dans ladite orifices d'entrée et de décharge (31, 33, 34, 47) pour les ouvrir et obturer.

fig-1

Fig-3

Fig-2

0 000 231

fig-5

fig-4

3

Fig-6

Fig-7a

fig-7b

Fig-9

Fig-8

Fig-10

0 000 231